# NEW EUROPEAN PATENT SPECIFICATION

(11) **EP 2 205 105 B2**
(45) Date of publication and mention of the opposition decision: **14.08.2019**
(45) Mention of the grant of the patent: 26.09.2012
(21) Application number: 08844115.9
(22) Date of filing: 30.10.2008
(51) Int. Cl.: A24B 13/00, A24B 15/28, A23L 27/00

(54) **SMOKELESS ORAL TOBACCO COMPOSITION AND METHODS OF MAKING THE SAME**
RAUCHLOSE ORALE TABAKZUSAMMENSETZUNG UND VERFAHREN ZU IHRER HERSTELLUNG
COMPOSITION ORALE DE TABAC SANS FUMÉE ET PROCÉDÉS DE FABRICATION

(30) Priority: 02.11.2007 SE 0702434
(43) Date of publication of application: 14.07.2010
(73) Proprietor: British American Tobacco (Investments) Limited, London WC2R 3LA (GB)
(72) Inventor: ONNO, Gael, London WC2R 3LA (GB)
(74) Representative: D Young & Co LLP
(86) International application number: PCT/EP2008/064750
(87) International publication number: WO 2009/056609

(56) References cited:
- WO-A-98/15191
- US-A- 4 515 769
- US-A1- 2003 070 687
- US-A1- 2007 186 941

## Description

### Field of the Invention

The invention relates generally to the field of smokeless oral tobacco products. More specifically, the invention relates to smokeless oral tobacco compositions comprising encapsulated flavourants. The invention also relates to methods of making flavoured smokeless oral tobacco compositions.

### Background of the Invention

Among the broad array of tobacco products offered on the market today there is a class of goods intended for oral administration which do not require combustion. Products include chewing tobacco and snuff, both of which typically contain at least tobacco particles and flavourants.

To prepare it for consumption, chewing tobacco is typically treated by dipping or spraying a sweetening and flavouring composition, called casing, on the cured tobacco leaves and partially drying the tobacco before forming the leaves into the desired configuration and packaging the product.

Snuff, which can be provided in dry or moist form, is similar to chewing tobacco in that it is also typically sweetened and flavoured either through application of the flavourant to the tobacco particles or blending of particles of flavourant with tobacco particles such as described in US 2007/186941 and WO 98/15191. Snus-style snuff is treated in a pasteurisation-like reaction during which flavourant, typically at least salt, and moisturisers such as water are added to chopped or ground tobacco which mixture is then heated.

Even though flavour additives are indispensable for producing a desired olfactory experience in many products, preferred flavours are attainable only through the use of volatile flavourants. This adds complexity to the task of manufacturing a product which will exhibit the desired flavour profile in use. This is so because it is not only the manufacturing and packaging stages where one must account for volatilisation and resultant loss of flavourant, but there are variables in transportation and storage which will affect the end product.

### Summary of the Invention

it is therefore an object of the present invention to provide an improved smokeless tobacco product and methods of making the same. More particularly, it is an object of the present invention to provide a moist oral smokeless tobacco product comprising moist smokeless tobacco, and at least a flavourant encapsulated in a hydrophobic encapsulating agent.

The present invention refers to a moist smokeless tobacco product as outlined by the claims, and a method of producing the same. Particularly, the moist smokeless tobacco product comprises moist smokeless tobacco and at least a flavourant encapsulated in a hydrophobic encapsulating agent.

As used herein, the terms "flavour" and "flavourant" refer to materials which may be used to create a desired taste or aroma in a product. They may include extracts (e.g., licorice, hydrangea, Japanese white bark magnolia leaf, chamomile, fenugreek, clove, menthol, Japanese mint, aniseed, cinnamon, herb, wintergreen, cherry, berry, peach, apple, Dramboui, bourbon, scotch, whiskey, spearmint, peppermint, lavender, cardamon, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour masking agents, bitterness receptor site blockers, receptor site enhancers, sweeteners (e.g., sucralose, acesulfame potassium, aspartame, saccharine, cyclamates, lactose, sucrose, glucose, fructose, sorbitol, or mannitol), and other additives such as chlorophyll, minerals, botanicals, or breath freshening agents. They may be imitation, synthetic or natural ingredients or blends thereof. They may be in any form, for example, oil, liquid, or powder.

"Organoleptic" refers to relating or contributing to the integrated sensory perception by the consumer that includes, for example, any combination of aroma, fragrance, flavour, taste, odour, mouth feel, or the like.

"Snuff" is used herein to generally describe a class of smokeless oral tobacco product which typically comprise cured tobacco which has been dried and ground to have a particle size of between 0.1-10 mm. The term covers both dry and moist forms; where one particular form is described with specificity herein a skilled worker would be capable of adapting the description as necessary to relate to the other form. Moist snuff is also referred to as snus.

"Smokeless oral tobacco product" is used herein to denote any tobacco product which is not intended for combustion but instead designed to be placed in the oral cavity of a user for a limited period of time, during which there is contact between the user's saliva and the product.

"Tobacco" as used herein includes any part, e.g., leaves, flowers, stems, of any member of the genus *Nicotiana* and reconstituted materials thereof. It includes derivatives such as specific compounds found in natural tobacco, e.g., nicotine, whether extracted or synthesized, as well as structural derivatives such as the fibrous portion of a tobacco leaf. It further includes tobacco substitutes which comprise individual chemicals and/or complex chemical entities which, when appropriately prepared, physically resemble natural tobacco.

### Detailed Description

The invention provides an improved smokeless oral tobacco product with an encapsulated flavourant.

The manufacturing method of the present invention can be described as a series of steps, although certain adjustments to the step sequence can be made by skilled workers. As is apparent from the description below and the appended claims, certain of the steps are optional.

### Tobacco Blend

Hereinafter the manufacturing of moist snuff (snus) is outlined. However, the encapsulated flavourant can be added to any smokeless tobacco for oral or nasal use, including chewing tobacco and dry snuff.

Moist snuff is commonly prepared using relatively dry tobacco which is ground, sieved and sorted into stem fractions and lamina fractions, each of these being further sorted into small (about 0.01-0.4 mm), medium (about 0.4-0.7) and large (about 0.7-1.0) particles. The tobacco leaves used are usually dried and often also further cured, e.g. smoke cured. The desired ratios of particle sizes and tobacco fractions are obtained. The relative amounts of stem to lamina will have some effect on flavour and nicotine delivery, as these components reside most significantly in the lamina portion. Commonly, the average particle size of tobacco used in moist snuff in below 10mm, suitably below 5mm. Flavour and other characteristics are also influenced by the particular tobacco type used and the curing method it has undergone. For tobacco types which are provided with no distinction between stem and lamina, Rustica or Oriental for example, there will be no separate fractions but merely a separation of tobacco particles by size.

The blend of tobacco particles is mixed with water and, typically, salt. Residual moisture from the tobacco and the added water combine to raise the moisture levels of the mixture to about 25 up to about 60 % by weight. Salt is one form of flavourant; optionally it may be excluded and/or another flavourant or sweeteners may be added at this stage.

The snus blend is then preferably pasteurised. Pasteurisation can take any form which is sufficient to render the product relatively sterile. Examples include high or low temperatures, e.g., heat pasteurisation at about 80-140°C for about at least 30 minutes via hot air, steam, microwaves, or other means, or cold pasteurisation. Other examples include irradiation and chemical treatment. One limitation on the pasteurisation method selected is that it should be appropriate for use with a product intended for human oral consumption. Another is that it should not present undue adverse effect on the taste, consistency, or other organoleptic properties of the final product.

After pasteurisation, the pH of the snus blend is checked and possibly adjusted. To achieve the desired characteristics of certain commercial blends, a pH of approximately 7 to 12 may be preferred at this stage of the process.

### Maturation

After the stage where in moisture content of the tobacco is raised and, if pasteurisation is applied, after such a pasteurisation stage, the smokeless tobacco may optionally be matured. Methods and equipment useful for maturation are known in the art, for example, the cased smokeless tobacco may be slowly mixed at a constant temperature. Usually, the tobacco blend is matured at a room temperatures or lower temperatures including temperatures below 0°C. The gentle stirring can continue for about one hour and up to a few weeks, suitably between 1 to 24 hours, often for about 5-15 hours. This stage may be effective at reducing pH of snus products and reducing moisture of all products to a desired level. Usually, humectants are traditionally added at this stage.

The encapsulated flavourant may be added to the tobacco during any stage of the preparation of the smokeless tobacco, including chewing tobacco and dry and moist snuff. When used in snuff, the encapsulated flavourant is suitably added to the tobacco mixture subsequent pasteurisation, preferably during maturation, especially if heating is applied during pasteurisation.

The encapsulated flavourant is added to the tobacco mixture in an amount of about 0.1 to 10 weight % of dry encapsulated flavourant based on total smokeless tobacco mixture. Suitably, the encapsulated flavourant is added in an amount of from about 1.0 to 5 weight %.

In addition, other flavourants including those mentioned in the present patent application may be added to the smokeless tobacco mixture without being encapsulated. Liquid flavourants are often sprayed onto the tobacco blend. Five percent (5%) by weight of liquid flavourant based on smokeless tobacco mixture is often considered a general top-end limit for the amount of liquid flavourant that can be added, typically during maturation. However, according to the invention a higher percentage of liquid non-encapsulated flavourant can be used. This allows increased flexibility in modifying the strength and complexity of flavours perceived in the finished product.

### Encapsulated flavourant

Apart from the flavourants outlined above, the flavourant may also encompass flavourant components usually comprising a mixture, such as a complex mixture, of several flavourants/fragrances naturally occurring in plant matter. The flavourant can also be a blend of several singly natural or synthetic flavours mimicking the natural blend of flavours. Preferably, the flavourants relate to components comprising any ingredients obtained from the ripened ovary (i.e. fruit) from flowering plants. By flowering plants is meant plants from the division of magnoliophyta within the kingdom of plantae. Suitably, the flavour constituents comprise ingredients originating from flowering plants from the division of magnoliophyta with the proviso that flowering plants of the family of Fabaceae are excluded. Flower plants may also be referred to as angiosperms. According to a preferred embodiment the flavour constituents comprises any ingredients originating from fruits (i.e. ripened ovaries) from the families Rutaceae, Rosaceae, and Musaceae. Examples of genera from the family of Rutaceae are Citrus, Boronia, Zanthoxylum and Agathosma. The genus Citrus include orange (Citrus cinensis), lemon (Citrus limon), grapefruit (Citrus paradisi), and lime (e.g. Citrus aurantifolia). Other citrus fruits are e.g. alemow, amanatsu, bergamot orange, bitter orange, blood orange, budda's hand, calamondin, citron, Clementine, daidai, dekopon, desert lime, djerku limau, finger lime, gajanimma, ichang lemon, imperial lemon, iyokan, kabuso, kaffir lime, key lime, kinnow, khasi pepeda, kumquat, limetta, limequat, mandarin lime, mandarin orange, meyer lemon, mikan, natsumikan, orangelo, orangequat, oroblanco, Persian lime, pomelo, ponderosa lemon, ponkan, rangpur, rough lemon, Satsuma, shekwasha, sudachi, sunki, sweetie, sweet lime, tachibana orange, tangelo, tangerine, tangor, ugli fruit, and yuzu.

The Rosaceae family (often referred to as the rose family) is often subdivided into the subfamilies of Rosoideae, Spiraeoideae, Maloideae, and Amygdaloideae. The subfamily Maloideae comprises plants having fruits such as apples, contoneasters, hawthorns, pears, quinces, rowans, whitebeans and the like. The most important genus within the family of Musaceae is Musa including many banana species, such as edible bananas derived from musa acuminata and musa balbisiana.

According to one aspect of the invention the flavour constituents comprise ingredients originating from fruits of plants of the genus citrus and the subfamily Maloideae.

As used herein, the families Rutaceae and Rosaceae reside in the order of Rosales, which in turn is an order under the class of Magnoliopsida. Magnoliopsida is a class of the division of Magnoliophyta comprised in the kingdom of Plantae. The family Musaceae is subordinated to the order of Zingiberales which stems from the class of Liliopsida, the latter class belonging to the division of Magnoliophyta.

Examples of flavourants obtained from fruits include but are not limited to dried apple, concentrated apple juice, dried banana, dried grape, concentrated grape juice, dried carrot, freeze dried pear, dried orange, concentrated orange juice, dried grapefruit, concentrated grapefruit juice, dried lemon, dried peach, and dried plum. Optionally, skins and/or peels may be used.

The flavourants per se may be provided as a solution such as an aqueous solution and oil, or as dry solids, alternatively solids dispersed in a solution or oil emulsified in an aqueous solution.

A blend of flavourants may be placed inside a single capsule, or a tobacco blend may be flavoured with two or more flavours, each encapsulated separately. The thickness of coating will affect flavour release during product use to some degree.

According to the invention, the flavourant is encapsulated in a hydrophobic encapsulating agent. As used herein hydrophobic means that the encapsulating agent, suitably forming an outer wall around a core material, the core material typically comprising the flavourant, has the ability to preserve the flavourants during the recommended period of storage of the moist smokeless tobacco product. Furthermore, the encapsulating agent may in general have such properties that a continuous release over time is predominantly occurring during oral usage. Also, the encapsulating agent can be essentially insoluble and nonreactive with the flavourant. The encapsulated flavourant may also be characterised as a capsule, particularly if the encapsulated flavourant particle has an outer wall material which can be distinguished from the core in respect of composition and/or physical properties.

The hydrophobic character of the encapsulating agent may be described by the contact angle of two surfaces, one being the flat (level) surface made of the hydrophobic agent (or with the surface covered by the hydrophobic agent) and the other constituting the tangent of the surface of a droplet of distilled water at the location where the droplet meets the flat surface. Typically, this contact angle, referred to as θ, is equal or greater than 90°, suitably more than 90°, and can be up to 180°. An angle θ of 90° signifies that the water-hydrophobic surface tension is exactly zero. If the contact angle is 180° than the water-hydrophobic surface tension equals the water-air surface tension.

The type of hydrophobic encapsulating agent used is partly dependent on the flavourant, and where applicable composition of core material comprising the flavourant, and may therefore vary.

Suitably, the encapsulating agent is poorly soluble in aqueous solutions, e.g. moist compositions such as moist smokeless tobacco, preferably essentially water insoluble (non-water soluble).

The release of the flavourant is suitably caused by alteration/degradation of the encapsulating agent with saliva and/or thermal degradation, e.g. melting of the encapsulation agent at a temperature present in the oral cavity.

The hydrophobic encapsulating agent can consist of essentially one compound, alternatively the encapsulating agent is a composition of several compounds. The composition may have one or more constituents being water-soluble, or at least partly water-soluble, as long as the composition has an overall hydrophobic character. The hydrophobic encapsulation agent may comprise carbohydrate based compounds such as saccharides including mono-, di-, oligo-, and polysaccharides; proteins, e.g. phosphoproteins such as sodium casein and gelatine; various fatty acids e.g. chemically modified fatty acids such as alteration of the carboxylic acid moiety by esterification e.g. fatty acid esters including fatty acids bonded to a backbone structure, such as glycerol, e.g. triesters of glycerol (triglyceride) and fatty acids, acid-base reaction, and reduction yielding fatty alcohols. By fatty acid is herein meant a carboxylic acid with an aliphatic chain having at least four carbon atoms. Typically, fatty acids derived from natural sources like fat and oil usually have an aliphatic chain having an even number of carbon atoms and commonly at least eight carbon atoms. The fatty acids can be saturated or unsaturated including polyunsaturated fatty acids, i.e. the aliphatic chains has two or more carbon-carbon double bonds.

Example of fatty acids include but are not limited to butyric-, caproic-, caprylic-, capric-, lauric-, myristic-, palmitic-, stearic-, arachidic-, behenic acid; myrisyoleic-, palmitoleic-, oleic-, linoleic-, arachidonic-, eicosapentaenoic-, erucic-, docosahexaenoic acid. The hydrophilic encapsulation agent may also include various fats such as edible vegetable fats, i.e. in general triesters of glycerol and fatty acids such as cocoa butter, and in addition any fat-soluble (hydrophobic) naturally occurring molecules such as mono-, di-, triglycerides, and phospholipids.

The hydrophobic encapsulation agent is selected from compounds or compositions releasing the flavourants due to thermal stimulus, e.g. an increase in temperature. For example, flavourants diffuse through the encapsulating agent, the encapsulating agent constituting the wall around the core material comprising flavourants, due to melting of encapsulating agent. The hydrophobic encapsulation agent is a compound or a mixture of compounds having a melting point above 30°C and below 40°C. Suitable encapsulating agents are e.g. fatty acid triclycerides such as cocoa butter (having a melting point in the range of about 34 to 38°C.

The flavourant may be encapsulated by using known flavour encapsulating methodology and technology. The chosen method of encapsulation is dependent on the physical state of the flavourant and the core material. Some flavour encapsulation technologies render encapsulated material in the size range of from 1 *µ*m to 1000 *µ*m, and are therefore often referred to as microencapsulation techniques. Microencapsulation methods are generally divided in to physical and chemical methods. Generally, the method of encapsulating flavourants comprises dispersing or emulsifying the flavourant in a liquid comprising any of the above mentioned encapsulating agents or mixtures thereof, applying shear forces to the dispersion or emulsion thereby, and atomisation of the liquid into a spray or mist containing small droplets, typically having a diameter between 0.5 *µ*m to 1 mm. Usually also surface active ingredients are added to the solution prior to mixing and atomisation, including emulsifiers and dispersing agents.

Suitable encapsulation methods include but are not limited to spray drying, spray cooling, spray chilling, spray coating, fluidised bed coating, freeze drying, annular jet, extrusion such as melt extrusion, coacervation, co-crystallisation, molecular inclusion and the like.

According to one aspect of the present invention, the flavourant is provided in a water-soluble matrix containing carbohydrate-based material and/or soluble proteins, constituting a core material. This water-soluble flavourant containing matrix is further embedded in the hydrophobic encapsulation agent. The matrix can be composed of essentially one water-soluble carbohydrate or water-soluble protein, or a mixture of several carbohydrates and water-soluble proteins. Furthermore, some components of the matrix may be sparingly water-soluble, or water insoluble, as long as the flavour matrix is overall water-soluble. Water-soluble carbohydrates embrace saccharides like mono-, di-, oligo-, and polysaccharides, i.e. molecules and polymers comprising monosaccharides linked by glycosidic bonds. Preferred saccharides are oligo- and polysaccharides including homopolysaccharides and heteropolysaccharides. Polysaccharides can be from the group of storage polysaccharides, such as starch, derivatives of starch, and glycogen; and the group of structural polysaccharides like cellulose, cellulose derivatives, and chitin. Typically, polysaccharides have between 40 to 3000 monosaccharide repeating units. Starch and specifically chemically modified starches are useful carbohydrates comprised in the flavourant matrix. By hydrolysis of starch linear dextrins are formed being mixtures of linear *α*-(1,4)-linked D-glucose polymers, whereas cyclodextrins are formed by enzymatic degradation starch. Cyclodextrins are toroidal structured molecules having typically 6-8 glucose residues, referred to as *α*-cyclodextrin, *β*-cyclodextrin, and *y-*cyclodextrin. Maltodextrin is a suitable linear dextrin.

Other suitable chemically modified starches include acid-treated starches, alkaline-modified starches, bleached starches, oxidised starches, enzyme-treated starches, acetylated starches, and acetylated oxidised starches. Pectin is an example of a suitable heteropolysaccharide. Other examples of suitable water-soluble polysaccharides include xanthan gum, gum arabicum, and carragenan.

The water-soluble flavourant matrix may be formed by any of the methods used for formation of the hydrophilic encapsulation. The method for forming the water-soluble matrix is above all dependent on in which form the flavourant per se in provided. The flavourant may be provided as an oil, often referred to as an essential oil, i.e. a hydrophobic liquid containing volatile flavour components. Yet, the flavourant can also be provided as an aqueous solution optionally containing structural compounds from the plant component harbouring the flavour, e.g. cellulose-containing components. Aqueous flavour containing solutions can embrace fruit juices containing fruit solids to a lesser or higher degree. Also, aqueous flavour containing solutions may also be dried, whereby the flavourant is provided in solid (powdered) form. Further examples of flavourants include mashed and dried plant components such as fruit.

The water-soluble matrix comprising the flavourant may be achieved in a process step separated from the formation of the hydrophobic encapsulation, alternatively, the water-soluble matrix and hydrophobic encapsulation can be formed essentially simultaneous.

In case the forming of the water-soluble matrix is a discrete process stage, the formation of the hydrophobic encapsulation is carried out subsequent the formation of the water-soluble matrix. Said hydrophobic encapsulation can suitably be performed by fluidised bed coating.

Suitable technologies for manufacture the water-soluble matrix include e.g. spray drying, freeze-drying (suitable for highly volatile flavours), spray cooling/chilling, fluidised bed coating, etc.

If the water-soluble flavourant matrix is formed prior to encapsulation, the flavourant is preferably present in an amount of from about 0.1 to 50% calculated as flavourant in whichever form based on total dry water-soluble flavourant matrix, more preferably from about 5 up to about 15 %:

Usually, the flavourant is present in the encapsulated flavourant in an amount of from about 0.1 to 40 % calculated as flavourant based on total dry encapsulated flavourant, preferably from about 2 to 20 %.

Any known or developed packaging methods and devices may be used. For example, smokeless tobacco products may be provided for direct use, simply portioned by weight or volume from the bulk blend into containers. Others may be formed into individual-use sachets or pouches before packaging, however, packaging into pouches is an automated, fast-moving process. As will be evident to a skilled worker, standard packaging machines may only be suitable to encapsulated flavours having a sufficient rigidity and strength so that they are not compressed, releasing flavourant, during the packaging process.

Furthermore, materials used as wrapping or pouch-forming material is typically provided to be heat-sealable. But heat sealing pouches may not provide an ideal function for temperature-sensitive encapsulating coatings, and a system of pre-sealing or folding may be preferred. Alternatively, the product may be cooled prior to heat sealing. Product prepared according to the novel process may also be incorporated into existing and developing usage forms, such as tablets and pellets.

### Example Snus-type Sachets of the Invention

30 kg of dark air-cured burley tobacco having a 50:50 ratio of lamina to stem fractions, and approximately 1/3 small, 1/3 medium, and 1/3 large particle sizes in each fraction are blended with 25 l H₂O and 5 kg NaCl in a Lödinge PLOUGHSHARE mixer (Florence, Kentucky, USA). The tobacco blend is pasteurized at approximately 100°C for about 1 hour. The mixture is allowed to cool to about 50°C, then 4 kg NaHCO₃ are added and the blend is stirred slowly and held at about 50°C for about 15 hours.

1 kg standard flavourant is blended in with mixing; the well-mixed blend is then kept at refrigeration for 7 days. After the rest period an encapsulated flavourant in the form of 1.2 kg powder is added to the mixed blend at a temperature of 20°C and the blend is gently mixed.

The encapsulated flavourant is formed by the following 3 steps process:

### Step 1: Hydrophilic matrix

The flavour provided in the form of a liquid is dispersed into a suitable amount of water and mixed with the carrier (e.g. a maltodextrin or a starch) in the presence of one or more emulsifiers (e.g. lecithin) in order to form an emulsion. The emulsion is then spray dried into a Multi Spray Drier tower.

### Step 2: Hydrophobic coating

The powder from step 1 is then coated into a fluid bed drier by a mix of fat (vegetable fat at low melting point temperature, e.g. cocoa butter). The settings are adjusted in order to prevent any agglomeration.

### Step 3:

1.2 kg of the powder (from step 2) is added manually to the mix.

The snus is then gently mixed (the snus is at a temperature of 20 deg C). During the mix, some liquid flavour could be sprayed on the mix (if required).

The blend is transferred to a packaging machine and portions are placed in a cellulose acetate wrapper and folded into pouch shapes. Twenty pouches are placed in a resealable plastic container and labelled for use. The labelled product is kept at room temperature while distributed, sold, and stored by the user.

The foregoing description and examples have been set forth merely to illustrate the invention and are not intended to be limiting. Since modifications of the described embodiments incorporating the spirit and substance of the invention may occur to persons skilled in the art, the invention should be construed broadly to include all variations within the scope of the appended claims.

## Claims

1. A moist smokeless tobacco product, comprising moist smokeless tobacco, and a flavourant, **characterised in that** the flavourant is comprised in a matrix comprising a water-soluble carbohydrate based material or gelatine, the matrix being encapsulated in a hydrophobic encapsulating agent, wherein the melting point of the encapsulating agent is above 30°C and below 40°C.

2. The product according to claim 1, wherein the hydrophobic encapsulating agent releases flavour during oral usage of the product.

3. The product according to claim 1 or 2, wherein the hydrophobic encapsulating agent is thermally affected during buccal usage.

4. The product according to claim 1, wherein the flavourant is comprised in a matrix, said matrix comprising a water-soluble carbohydrate based material.

5. The product according to claim 4, wherein the water-soluble carbohydrate based material is a saccharide, which is optionally:
(a) selected from mono-, di-, oligo-, and polysaccharides and mixtures thereof; or,
(b) a polysaccharide, which is optionally chemically modified starch.

6. The product according to any one of the preceding claims, wherein the average particle size of the tobacco is below 2 mm, suitably below 1.5 mm, more suitably below 1 mm.

7. The product according to any one of the preceding claims, further comprising non-encapsulated flavourants, which are optionally present in an amount of greater than 5% by weight based in the smokeless tobacco mixture.

8. A method of producing a moist smokeless tobacco product, **characterised in that** the method comprises providing a flavourant in a matrix comprising a water-soluble carbohydrate-based material or gelatine, and encapsulating said matrix in a hydrophobic encapsulating agent, wherein the melting point of the encapsulating agent is above 30°C and below 40°C.

9. The method according to claim 8, wherein the method involves a step in which the moisture content of the tobacco is raised.

10. The method according to claim 8 or 9, wherein the method involves a pasteurisation step, and/or a maturation step.

11. The method according to any one of claims 8 to 10, wherein encapsulated flavourant is added to the tobacco at any stage of the preparation of the smokeless tobacco product.

12. The method according to claim 8, wherein the encapsulated flavourant is added to the tobacco after any pasteurisation step and during a maturation step.

13. A pouch for oral use comprising the product as defined by claims 1 to 7.

14. A consumer package comprising the product as defined by the claims 1 to 7, and 13.

## Patentansprüche

1. Feuchtes, rauchloses Tabakprodukt, umfassend feuchten rauchlosen Tabak und einen Aromastoff, **dadurch gekennzeichnet, dass** der Aromastoff in einer Matrix enthalten ist, die ein wasserlösliches Material auf Kohlenhydratbasis oder Gelatine umfasst, wobei die Matrix in einem hydrophoben Verkapselungsmittel verkapselt ist, wobei der Schmelzpunkt des Verkapselungsmittels über 30 °C und unter 40 °C liegt.

2. Produkt gemäß Anspruch 1, wobei das hydrophobe Verkapselungsmittel während der oralen Verwendung des Produkts Aroma freisetzt.

3. Produkt gemäß Anspruch 1 oder 2, wobei das hydrophobe Verkapselungsmittel während der bukkalen Verwendung thermisch angegriffen wird.

4. Produkt gemäß Anspruch 1, wobei der Aromastoff in einer Matrix enthalten ist, wobei die Matrix ein wasserlösliches Material auf Kohlenhydratbasis umfasst.

5. Produkt gemäß Anspruch 4, wobei das wasserlösliche Material auf Kohlenhydratbasis ein Saccharid ist, das gegebenenfalls ist:
(a) ausgewählt aus Mono-, Di-, Oligo- und Polysacchariden und Gemischen davon; oder
(b) ein Polysaccharid, das gegebenenfalls chemisch modifizierte Stärke ist.

6. Produkt gemäß einem der vorstehenden Ansprüche, wobei die mittlere Partikelgröße des Tabaks kleiner als 2 mm ist, geeignet kleiner als 1,5 mm, besser geeignet kleiner als 1 mm.

7. Produkt gemäß einem der vorstehenden Ansprüche, ferner umfassend nichtverkapselte Aromastoffe, die gegebenenfalls in einer Menge von größer als 5 Gew.-%, bezogen auf das rauchlose Tabakgemisch, vorhanden sind.

8. Verfahren zur Herstellung eines feuchten rauchlosen Tabakprodukts, **dadurch gekennzeichnet, dass** das Verfahren Bereitstellen eines Aromastoffs in einer Matrix, die ein wasserlösliches Material auf Kohlenhydratbasis oder Gelatine umfasst, und Verkapseln der Matrix in einem hydrophoben Verkapselungsmittel umfasst, wobei der Schmelzpunkt des Verkapselungsmittels über 30 °C und unter 40 °C liegt.

9. Verfahren gemäß Anspruch 8, wobei das Verfahren einen Schritt umfasst, bei dem der Feuchtegehalt des Tabaks erhöht wird.

10. Verfahren gemäß Anspruch 8 oder 9, wobei das Verfahren einen Pasteurisierungsschritt und/oder einen Reifungsschritt umfasst.

11. Verfahren gemäß einem der Ansprüche 8 bis 10, wobei der verkapselte Aromastoff bei einer beliebigen Stufe der Herstellung des rauchlosen Tabakprodukts zu dem Tabak zugegeben wird.

12. Verfahren gemäß Anspruch 8, wobei der verkapselte Aromastoff nach einem Pasteurisierungsschritt und während eines Reifungsschritts zu dem Tabak zugegeben wird.

13. Beutel zur oralen Verwendung, umfassend das Produkt gemäß Ansprüchen 1 bis 7.

14. Verbraucherpackung, umfassend das Produkt gemäß Ansprüchen 1 bis 7 und 13.

## Revendications

1. Produit de tabac humide sans fumée, comprenant du tabac humide sans fumée, et un agent aromatisant, **caractérisé en ce que** l'agent aromatisant est compris dans une matrice comprenant un matériau à base d'un glucide hydrosoluble ou de la gélatine, la matrice étant encapsulée dans un agent d'encapsulation hydrophobe, où le point de fusion de l'agent d'encapsulation est supérieur à 30°C et inférieur à 40°C.

2. Produit selon la revendication 1, dans lequel l'agent d'encapsulation hydrophobe libère un arôme lors de l'usage oral du produit.

3. Produit selon la revendication 1 ou 2, dans lequel l'agent d'encapsulation hydrophobe est affecté thermiquement lors de l'usage buccal.

4. Produit selon la revendication 1, dans lequel l'agent aromatisant est compris dans une matrice, ladite matrice comprenant un matériau à base d'un glucide hydrosoluble.

5. Produit selon la revendication 4, dans lequel le matériau à base d'un glucide hydrosoluble est un saccharide, qui est éventuellement
(a) choisi parmi les mono-, di-, oligo- et polysaccharides et des mélanges de ceux-ci ; ou
(b) un polysaccharide, qui est de l'amidon éventuellement chimiquement modifié.

6. Produit selon l'une quelconque des revendications précédentes, dans lequel la taille de particules moyenne du tabac est inférieure à 2 mm, de manière convenable inférieure à 1,5 mm, de manière plus convenable inférieure à 1 mm.

7. Produit selon l'une quelconque des revendications précédentes, comprenant en outre des agents aromatisants non encapsulés, qui sont éventuellement présents selon une quantité supérieure à 5% en poids, sur la base du mélange de tabac sans fumée.

8. Méthode de production d'un produit de tabac humide sans fumée, **caractérisée en ce que** la méthode comprend la fourniture d'un agent aromatisant dans une matrice comprenant un matériau à base d'un glucide hydrosoluble ou de la gélatine, et l'encapsulation de ladite matrice dans un agent d'encapsulation hydrophobe, où le point de fusion de l'agent d'encapsulation est supérieur à 30°C et inférieur à 40°C.

9. Méthode selon la revendication 8, **caractérisée en ce que** la méthode implique une étape dans laquelle la teneur en humidité du tabac est augmentée.

10. Méthode selon la revendication 8 ou 9, **caractérisée en ce que** la méthode implique une étape de pasteurisation et/ou une étape de maturation.

11. Méthode selon l'une quelconque des revendications 8 à 10, dans laquelle un agent aromatisant encapsulé est ajouté au tabac lors d'une étape quelconque de la préparation du produit de tabac sans fumée.

12. Méthode selon la revendication 8, dans laquelle l'agent aromatisant encapsulé est ajouté au tabac après une étape de pasteurisation quelconque et pendant une étape de maturation.

13. Blague destinée à un usage oral, comprenant le produit tel que défini selon les revendications 1 à 7.

14. Emballage de vente, comprenant le produit tel que défini selon les revendications 1 à 7, et 13.
